# EUROPEAN PATENT APPLICATION

(11) **EP 2 541 900 A2**
(43) Date of publication of application: **02.01.2013**
(21) Application number: 12160979.6
(22) Date of filing: 23.03.2012
(51) Int. Cl.: H04N 5/76, H04N 5/765, H04N 21/436, H04N 21/442

(54) **Broadcast receiving apparatus and method**

(30) Priority: 31.05.2011 JP 2011122959
(71) Applicant: Kabushiki Kaisha Toshiba, Minato-ku Tokyo (JP)
(72) Inventor: Hamada, Tomo, Tokyo (JP)
(74) Representative: HOFFMANN EITLE

(57) **Abstract**

According to one embodiment, a broadcast receiving apparatus includes: a setting module configured to set simultaneous recording with plural channels; a measuring module configured to measure the numbers of recordable channels of plural respective recording media that are connected via a prescribed interface; and a simultaneous recording module configured to determine a combination of recording media capable of securing the number of channels of the simultaneous recording on the basis of the measured numbers of recordable channels, and configured to perform the simultaneous recording using the determined combination of recording media.

## Description

The application is based upon and claims the benefit of priority from Japanese Patent Application No. 2011-122959 filed on May 31, 2011, the entire contents of which are incorporated herein by reference.

### BACKGROUND

### 1. Field

The present invention relates to a broadcast receiving apparatus and method for recording a received broadcast content or the like in a digital recording and reproducing apparatus via a home network or a USB interface, for example, and reproducing a recorded broadcast content or the like.

### 2. Description of the Related Art

As is well known, in recent years, the digitization of the TV broadcast has been being promoted. For example, in Japan, not only the BS (broadcasting satellite) digital broadcast and the 110° CS (communication satellite) digital broadcast but also the ground-wave digital broadcast is now in practical use.

And a digital broadcast receiving apparatus for receiving programs of such digital TV broadcast schemes can digitally record a received program in a large-capacity digital recording apparatus such as an HDD (hard disk drive) connected to it and can reproduce a recorded program.

An HDD is connected to such a digital broadcast receiving apparatus via a USB interface and function extending programs of various kinds of processing for allowing it to act as if to be a digital TV receiver incorporating a hard disk recorder is stored therein. In this connection, a technique is disclosed which allows an HDD which is less expensive than AV HDDs and is of such a type as to be connected using a USB cable to serve as a disk subunit on an IEEE 1394 network.

Such a broadcast receiving apparatus is provided with, for example, a time shift function which uses a built-in HDD. Whereas such a broadcast receiving apparatus usually records a program in a built-in HDD, when a video recording request beyond its simultaneous recording ability has occurred it may be able to use a technique of performing video recording using an inactive resource of another video recording apparatus capable of cooperating with it over a network.

However, it is desired to perform, with flexibility, recording of programs in digital recording and reproducing apparatus (e.g., external HDDs) that are not uniform in performance and reproduction of a program recorded therein.

### BRIEF DESCRIPTION OF THE DRAWINGS

A general configuration that implements the various feature of embodiments will be described with reference to the drawings. The drawings and the associated descriptions are provided to illustrate embodiments and not to limit the scope of the embodiments.
Fig. 1 shows an appearance of a digital TV broadcast receiver 111 according to an embodiment and a network system centered by the digital TV broadcast receiver 111;
Fig. 2 shows a main signal processing system of the digital TV broadcast receiver 111;
Fig. 3 shows a device information list used in the embodiment;
Fig. 4 is a flowchart of a process according to the embodiment;
Fig. 5 shows a new device registration picture which is an example GUI picture; and
Fig. 6 shows an example time schedule used in the embodiment.

### DETAILED DESCRIPTION

According to one embodiment of the invention, a broadcast receiving apparatus includes: a setting module configured to set simultaneous recording with plural channels; a measuring module configured to measure the numbers of recordable channels of plural respective recording media that are connected via a prescribed interface; and a simultaneous recording module configured to determine a combination of recording media capable of securing the number of channels of the simultaneous recording on the basis of the measured numbers of recordable channels, and configured to perform the simultaneous recording using the determined combination of recording media.

According to another embodiment of the invention, a broadcast receiving method includes: setting simultaneous recording with plural channels; measuring the numbers of recordable channels of plural respective recording media that are connected via a prescribed interface; and determining a combination of recording media capable of securing the number of channels of the simultaneous recording on the basis of the measured numbers of recordable channels, and performing the simultaneous recording using the determined combination of recording media.

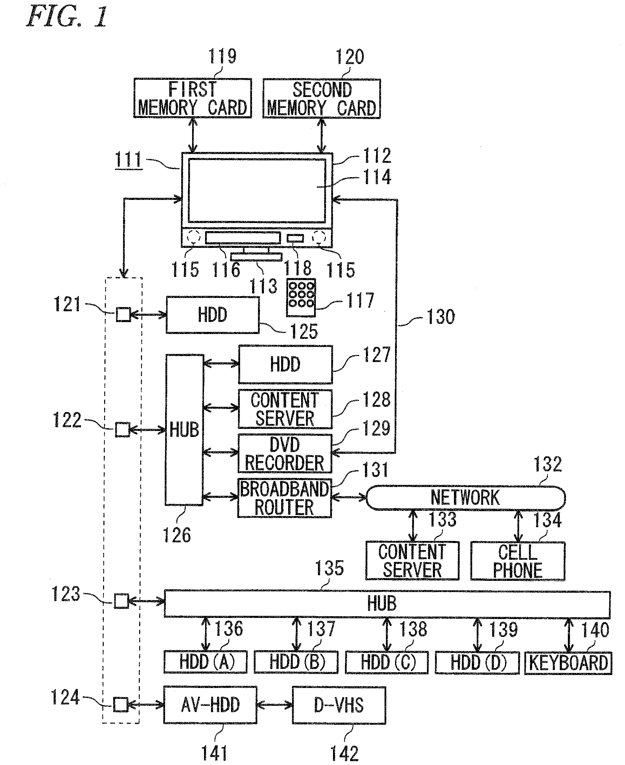

An embodiment of the present invention will be hereinafter described with reference to Figs. 1-6.

Fig. 1 shows an appearance of a digital TV broadcast receiver 111 having a network function according to the embodiment which is a broadcast receiving apparatus and an example network system centered by the digital TV broadcast receiver 111.

The digital TV broadcast receiver 111 is mainly composed of a thin cabinet 112 and a support stage 113 which supports the cabinet 112 in an erected posture. The cabinet 112 is provided with a flat panel video display 114 such as an SED (surface-conduction electron-emitter display) panel or a liquid crystal display, speakers 115, a manipulation unit 116, a light receiving unit 118 for receiving manipulation information that is transmitted from a remote controller 117, etc.

A first memory card 119 such as an SD (secure digital) memory card, an MMC (multimedia card), or a memory stick can be inserted into and removed from the digital TV broadcast receiver 111. Such information as a program or a photograph is recorded in and reproduced from the first memory card 119.

A second memory card (IC card) 120 in which contract information or the like is recoded can also be inserted into and removed from the digital TV broadcast receiver 111. Information is recorded in and reproduced from the second memory card 120.

The digital TV broadcast receiver 111 is also provided with a first LAN (local area network) terminal 121, a second LAN terminal 122, a USB (universal serial bus) terminal 123, and an i-LINK terminal 124.

Among the terminals 121-124, the first LAN terminal 121, which is a port dedicated to a LAN-compatible HDD, is used for recording in a LAN-compatible HDD 125 which is a NAS (network attached storage) and is connected to the first LAN terminal 121 and reproducing information recorded therein according to Ethernet (registered trademark).

The provision of the first LAN terminal 121 which is a port dedicated to a LAN-compatible HDD makes it possible to record a program having Hi-Vision image quality stably in the LAN-compatible HDD 125 without being affected by other network environments, use statuses of other networks, or the like.

The second LAN terminal 122 is a general Ethernet LAN-compatible port, and a LAN-compatible HDD 127, a content server 128, a DVD (digital versatile disc) recorder 129 incorporating an HDD, and other apparatus are connected to the second LAN terminal 122 via a hub 126, for example. The second LAN terminal 122 is used for exchanging information with these apparatus.

The content server 128 has functions that allow it to operate as a content server in a home network, and is a UPnP (universal plug and play) -compatible apparatus which is provided with a service for providing URI (universal resource identifier) information that is necessary for access to a content.

The DVD recorder 129 needs to be provided with a dedicated analog transmission line 130 for exchange of analog video information and audio information with the digital TV broadcast receiver 111 because digital information that is communicated via the second LAN terminal 122 is only control system information.

Furthermore, the second LAN terminal 122 is connected to a network 132 such as the Internet via the hub 126 and a broadband router 131. The second LAN terminal 122 is thus used for exchanging information with a content server 133, a cell phone 134, etc. over the network 132.

The content server 128 has functions that allow it to operate as a content server, and is a UPnP-compatible apparatus which is provided with a service for providing URI information that is necessary for access to a content.

The USB terminal 123 is a general USB-compatible port. For example, HDDs 136-139, a keyboard 140, etc. are connected to the USB terminal 123 via a hub 135 and the USB terminal 123 is used for exchanging information with these USB devices.

For example, an AV-HDD 141, a D (digital)-VHS (video home system) recorder 142, etc. which are connected to each other serially are connected to the i.LINK terminal 124 and the 1. LINK terminal 124 is used for exchanging information with these apparatus.

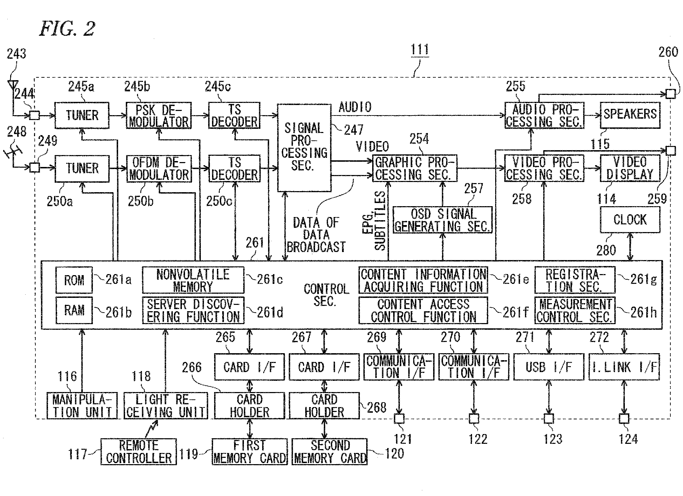

Fig. 2 shows a main signal processing systemof the digital TV broadcast receiver 111.

Satellite digital TV broadcast signals received by a BS/CS digital broadcast receiving antenna 243 are supplied to a satellite digital broadcast tuner 245a via an input terminal 244.

The tuner 245a tunes in to a broadcast signal on a desired channel according to a control signal supplied from a control section 261, and the selected broadcast signal is output to a PSK (phase shift keying) demodulator 245b.

The PSK demodulator 245b demodulates, according to a control signal supplied from the control section 261, the broadcast signal selected by the tuner 245a into a transport stream (TS) containing a desired program, which is output to a TS decoder 245c.

The TS decoder 245c performs TS decoding on the TS-multiplexed signal according to a control signal supplied from the control section 261, and outputs, to an STD buffer 247f of a signal processing section 247, a PES (packetized elementary stream) obtained by depacketizing a digital video signal and audio signal of the desired program.

Furthermore, the TS decoder 245c outputs, to a section processing section 247h of the signal processing section 247, section information that is transmitted by digital broadcast.

Ground-wave digital TV broadcast signals received by a ground-wave broadcast receiving antenna 248 are supplied to a ground-wave digital broadcast tuner 250a via an input terminal 249.

The tuner 250a tunes in to a broadcast signal on a desired channel according to a control signal supplied from a control section 261, and the selected broadcast signal is output to an OFDM (orthogonal frequency division multiplexing) demodulator 250b.

The OFDM demodulator 250b demodulates, according to a control signal supplied from the control section 261, the broadcast signal selected by the tuner 250a into a transport stream containing a desired program, which is output to a TS decoder 250c.

The TS decoder 250c performs TS decoding on the TS-multiplexed signal according to a control signal supplied from the control section 261, and outputs, to the STD buffer 247f of the signal processing section 247, a PES (packetized elementary stream) obtained by depacketizing a digital video signal and audio signal of the desired program.

Furthermore, the TS decoder 250c outputs, to the section processing section 247h of the signal processing section 247, section information that is transmitted by digital broadcast.

During TV viewing, the signal processing section 247 selectively performs prescribed digital signal processing on digital video signals and audio signals supplied from the respective TS decoders 245c and 250c, and outputs a resulting video signal and audio signal to a graphic processing section 254 and an audio processing section 255, respectively. During content reproduction, the signal processing section 247 selects a reproduction signal of a content that is input from the control section 261, performs prescribed digital signal processing on it, and outputs a resulting video signal and audio signal to a graphic processing section 254 and an audio processing section 255, respectively.

Various data for acquisition of a program, electronic program guide (EPG) information, program attribute information (program genre etc.), and subtitle information and other information (service information (SI and PSI)) are input from the signal processing section 247 to the control section 261.

The control section 261 performs image generation processing for display of an EPG or a subtitle on the basis of the above pieces of input information, and outputs generated image information to the graphic processing section 254.

The section processing section 247h extracts various data for acquisition of a program, EPG information, program attribute information (program genre etc.), and subtitle information and other information (service information (SI and PSI)) from section information that is input from the TS decoder 245c or 250c, and outputs them to the controller 261.

The graphic processing section 254 has a function of combining (1) a digital video signal supplied from an AV decoder 247g of the signal processing section 247, (2) an OSD (on-screen display) signal generated by an OSD signal generating section 257, (3) image data of a data broadcast, and (4) an EPG, a subtitle signal, or a GUI picture generated by the control section 261 and outputting a resulting video signal to the video processing section 258.

To display a subtitle of a subtitle broadcast, the graphic processing section 254 performs processing of superimposing subtitle information of a video signal on the basis of subtitle information supplied from the control section 261.

The digital video signal that is output from the graphic processing section 254 is supplied to the video processing section 258. The video processing section 258 converts the received digital video signal into an analog video signal having such a format as to be displayable by the video display 114 and outputs the analog video signal to the video display 114 to cause it to display video. The video processing section 258 also outputs the analog video signal to the outside via an output terminal 259.

The audio processing section 255 converts the received digital audio signal into analog audio signals having such a format as to be reproducible by the speakers 115 and outputs the analog audio signals to the speakers 115 to cause them to reproduce a sound. The audio processing section 255 also outputs the analog audio signals to the outside via an output terminal 260.

All operations, including the above-described various receiving operations, of the digital TV broadcast receiver 111 are supervised by the control section 261. Incorporating a CPU (central processing unit) etc., the control section 261 receives manipulation information from the manipulation unit 116 or receives, via the light receiving unit 118, manipulation information transmitted from the remote controller 117 and controls individual sections so that the content of the manipulation is reflected.

In doing so, the control section 261 uses a ROM (read-only memory) 261a which is mainly stored with control programs to be run by the CPU, a RAM (random access memory) 261b which provides a work area for the CPU, and a nonvolatile memory 261c for storing various kinds of setting information and control information etc.

The control section 261 is connected via a card interface (I/F) 265 to a card holder 266 into which the first memory card 119 can be inserted. Thus, the control section 261 can exchange information with the first memory card 119 that is inserted in the card holder 266 via the card I/F 265.

The control section 261 is connected via a card I/F 267 to a card holder 268 into which the second memory card 120 can be inserted. Thus, the control section 261 can exchange information with the second memory card 120 that is inserted in the card holder 268 via the card I/F 267.

The control section 261 is connected the first LAN terminal 121 via a communication I/F 269. Thus, the control section 261 can exchange information with the LAN-compatible HDD 125 connected to the first LAN terminal 121, via the communication I/F 269. In doing so, the control section 261, which has a DHCP (dynamic host configuration protocol) server function, controls the LAN-compatible HDD 125 by assigning an IP (Internet protocol) address to it.

The control section 261 is connected the second LAN terminal 122 via a communication I/F 270. Thus, the control section 261 can exchange information with the individual apparatus (see Fig. 1) connected to the second LAN terminal 122, via the communication I/F 270.

The control section 261 is connected the USE terminal 123 via a USB I/F 271. Thus, the control section 261 can exchange information with the individual devices (see Fig. 1) connected to the USB terminal 123, via the USB I/F 271.

Furthermore, the control section 261 is connected the i.LINK terminal 124 via an i.LINK I/F 272. Thus, the control section 261 can exchange information with the individual apparatus (see Fig. 1) connected to the i.LINK terminal 124, via the i.LINK I/F 272.

Incidentally, in the embodiment, the LAN-compatible HDD 125 is stored with registration files containing storage IDs (including IP addresses and apparatus/device names) that were assigned to the HDDs 125 and 127, the content server 128, and the DVD recorder 129, respectively, at the time of initial registration.

The nonvolatile memory 261c is also stored with the storage IDs of the HDDs 125 and 127, the content server 128, and the DVD recorder 129.

The control section 261 is provided with, as functions relating to the embodiment, (1) a server discovering function 261which uses UPnP, (2) a content inf ormation acquiring function 261e which uses UPnP, and (3) a content access control function 261f.
(1) By means of the server discovering function 261d, the control section 261 finds a UPnP-compatible apparatus on the network 132 using a discovery function of UPnP. For example, the server discovering function 261d discovers the content server 128 using the discovery function of UPnP.
(2) By means of the content information acquiring function 261e, the control section 261 controls a UPnP-compatible apparatus using a control function of UPnP and acquires URI information that is necessary to access a content in the UPnP-compatibleapparatus. For example, the content information acquiring function 261e controls the content server 128 and acquires, from the content server 128, URI information that is necessary to access a content stored in an HDD, for example, of the content server 128.
(3) By means of the content access control function 261f, the control section 261 judges whether access to the content should be permitted or not on the basis of server IP address information acquired by the server discovering function 261d, IP address information that is obtained from the URI information acquired by the content information acquiring function 261e, and an IP address assigned to the LAN terminal 122 of the digital TV broadcast receiver 111 and a net mask. The control section 261 permits the access to the content if it judges the access should be permitted. If judging that the access should not be permitted, the control section 261 OSD-displays a message to that effect on the video display 114.

The control section 261 is also provided with a registration section 261g for registering recording and reproducing apparatus which perform recording and reproduction processing and exist on the network 132 and a measurement control section 261h for measuring a recording speed of recording of a file at an arbitrary recording position. The control section 261 thereby performs measurement processing, which will be described later in detail.

A description will now be made of a case that an HDD 139 which is a USB device is connected to the digital TV broadcast receiver 111 via the USB terminal 123 which is a USB-compatible port and information is recorded in or reproduced from the HDD 139 (hereinafter referred to as a USB HDD 139).

However, the invention is not limited to the case of using USB and applicable to cases of using other interfaces such as IEEE 1394 and LAN-HDD.

Although in Fig. 1 plural USB devices including the USB HDD 139 are used via the hub 135, it is preferable that the USB HDD 139 be connected via a dedicated port to prevent influences from the other devices.

Incidentally, at present, TV receivers capable of time shift recording with a built-in HDD are on the market. And it is expect that demand for products capable of time shift recording with an external HDD will increase in the future.

However, not all USB HDDs enable 6-channel time shift recording (six is just an example of the maximum number of time-shift-recordable channels) ; portable HDDs and old USB HDDs may be insufficient in performance (described later).

In the embodiment, it is intended to enable time shift recording even with such USB HDDs by employing the following procedure:
(1) When a USB HDD is connected to the digital TV broadcast receiver 111, its performance is measured and the number of recordable channels is thereby calculated.
(2) A time schedule is produced by calculating a combination of USB HDDs that enables recording with a maximum number of channels and longest recording on the basis of the numbers of recordable channels and maximum recordable times.
(3) Rescheduling is performed automatically even if a USB HDD cannot be accessed.

### (General operation of embodiment)

The embodiment assumes a hardware configuration in which as show in Fig. 1 the digital TV broadcast receiver 111 can perform time shift recording on external USB HDDs.

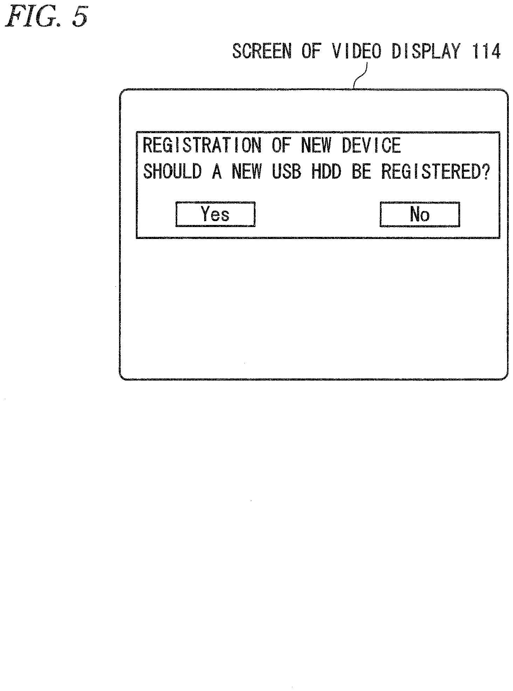

When an external USB HDD is connected to the digital TV broadcast receiver 111, a pop-up picture shown in Fig. 5 (described later) which urges the user to register it is displayed on the video display 114. If the user selects "Yes" and the external USB HDD is thereby registered, its performance is measured by internal processing of the digital TV broadcast receiver 111.

The performance measurement is performed to check whether time shift recording with the maximum number of recording channels is possible with the specified USB HDD. Example measurement items of the performance measurement are speeds of writing, reading, and chasing playback.

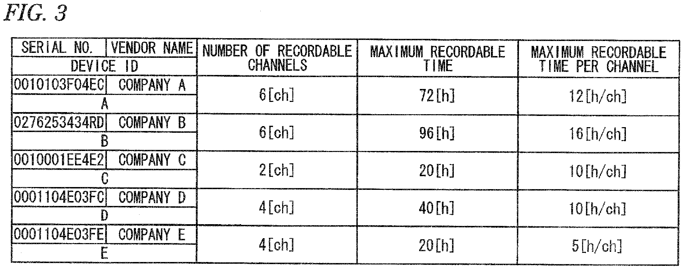

A measurement result is recorded as a list item of a list including a device ID and the number of recordable channels (see Fig. 3). For each USB HDD, not only the number of recordable channels but also a maximum recordable time per channel which is obtained by dividing a time corresponding to a total capacity by the number of recordable channels is recorded. For example, the device ID consists of a serial number and a vendor name (described below).

### (Operation for storing measurement information of the number of recordable channels in the digital TV broadcast receiver 111)

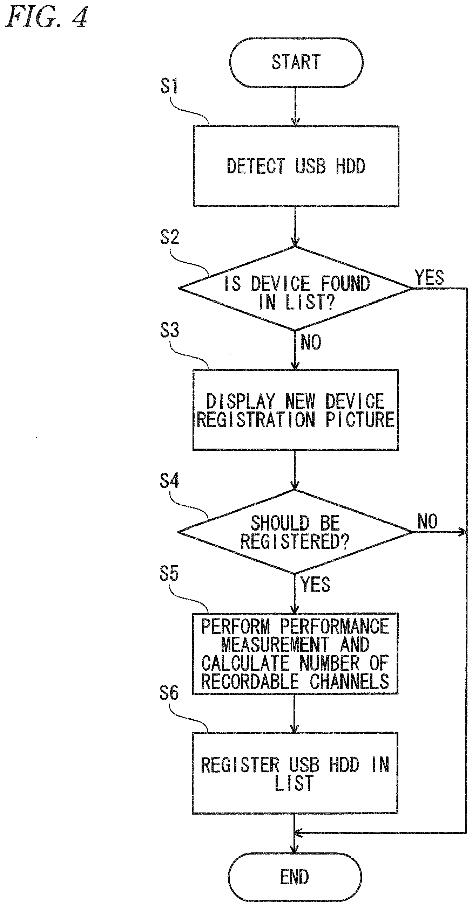

A detailed operation of the embodiment will be described below with reference to Fig. 4. Fig. 4 is a flowchart of a process according to the embodiment which is executed by the control section 261 unless otherwise specified.

In the digital TV broadcast receiver 111, a list of measurement results of the numbers of recordable channels is stored in a prescribed area of the nonvolatile memory 261c. For example, the list of measurement results of the numbers of recordable channels is a set of at least a serial number, a vendor name, and a measurement result.

When the USB HDD 139 (or any of the USB HDDs 136-138) is connected to the digital TV broadcast receiver 111 having a recording and reproducing function, at step S1 the digital TV broadcast receiver 111 detects it by hot plugging, polling, or a like method.

At step S2, the digital TV broadcast receiver 111 judges whether or not the serial number and the vendor name of the USB HDD 139 that was detected at step S1 is found in the serial numbers and the vendor names contained in the list of measurement results of the numbers of recordable channels which is stored in the nonvolatile memory 261c.

If the serial number and the vendor name of the detected USB HDD 139 are found in the list (S2: yes), the digital TV broadcast receiver 111 judges that the number of recordable channels of the connected USB HDD 139 has already been measured and the process is finished. If the USB HDD 139 has already passed a measurement test for the number of recordable channels, a message to that effect may be displayed as appropriate.

On the other hand, if the serial number and the vendor name of the detected USB HDD 139 are not found in the list (S2: no), the digital TV broadcast receiver 111 judges that the connected USB HDD 139 is not registered (newly connected). At step S3, the digital TV broadcast receiver 111 displays, on the video display 114, a GUI picture as shown in Fig. 5 to urge the user to decide whether to register it newly. The GUI picture may be generated by the control section 261 and the graphic processing section 154 and superimposed on a current picture. If the user selects "Yes" in the GUI picture of Fig. 5 and presses, for example, the enter button of the remote controller 117 (S4: yes), at step S5 the digital TV broadcast receiver 111 measures the number of recordable channels of the detected USB HDD 139 (more specifically, it performs a performance measurement and calculates the number of recordable channels). On the other hand, if the user selects "No" and presses, for example, the enter button of the remote controller 117 (S4: no), the process is finished. In this case, a message to the effect that registration of the USB HDD 139 has been canceled may be display as appropriate.

If the number of recordable channels was measured successfully at step S5, the digital TV broadcast receiver 111 updates the list of measurement results of the numbers of recordable channels which is stored in the nonvolatile memory 261c by adding the serial number and the vendor name of the USB HDD 139 to it. If the measurement of the number of recordable channels results in a failure, the digital TV broadcast receiver 111 may perform error processing, for example, display a message to the effect that the USB HDD 139 cannot be used for recording or reproduction.

As described above, in the embodiment, when a USB HDD for which the number of recordable channels was measured once is re-connected to the digital TV broadcast receiver 111 after removal, it is not subjected to measurement of the number of recordable channels. A broadcast receiving apparatus and a method can thus be provided in which such a measurement time is saved.

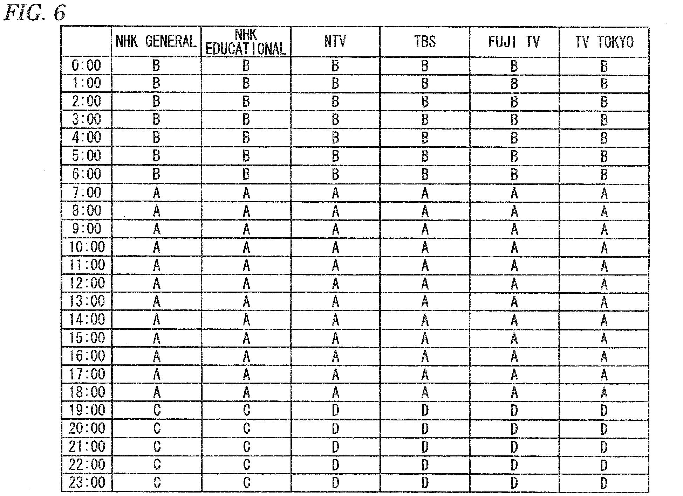

When the time shift function turns effective, as shown in Fig. 6 the digital TV broadcast receiver 111 produces a time schedule of USB HDDs used. In Fig. 6, the vertical axis represents the time slot and the horizontal axis represents the broadcasting station. Symbols A-D denote that recording is performed with the USB HDD (A) to the USB HDD (D), respectively.

The time schedule of Fig. 6 realizes time shift recording not only by using the USB HDD (A) and the USB HDD (B) singly each of which enables recording with the maximum number of channels which corresponds to the number of broadcasting stations but also by using the USB HDD (C) and the USB HDD (D) simultaneously each of which does not enable recording with the maximum number of channels.

The USB HDD (E) which is the same as the USB HDD (D) in the number of recordable channels is different from the USB HDD (C) in the capacity per channel. Therefore, for example, if the USB HDD (C) and the USB HDD (E), rather than the USB HDD (C) and the USB HDD (D), are combined, they provide the same recording time (from a start time to an end time). It is generally possible to read a capacity from each USB HDD instead of measuring it.

Anecessarynumber of channels for simultaneous recording is secured as in the above example.

A new time schedule can be produced automatically if a USB HDD to be used for recording cannot be accessed for a certain reason such as its disconnection or a failure of access to it.

For example, if the time schedule of Fig. 6 is used and access to the USB HDD (A) fails at AM 7: 00, a new time schedule is produced so as to perform time shift recoding using the USB HDD (C) and the USB HDD (D). This is an example fail-safe function.

Three important points of the above-described time shift function are as follows:
(1) When a USB HDD is connected to the digital TV broadcast receiver 111, a performance measurement is performed thereon to calculate the number of recordable channels.
(2) A combination of USB HDDs that enable recording with a maximum number of channels and longest recording is calculated on the basis of the numbers of recordable channels and maximum recordable times, and a recording time schedule is produced using the calculated combination.
(3) Rescheduling is performed automatically even if a USB HDD is not accessed.

Other advantages of the embodiment are as follows. Since the system of the embodiment is a closed system within a local network including a TV receiver (no access is made to any external server), no cumbersome setting need to be made and it is not necessary to purchase a separate device. The embodiment is effective because no additional cost or time and labor are required.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A broadcast receiving apparatus comprising:
a setting module configured to set simultaneous recording with plural channels;
a measuring module configured to measure the numbers of recordable channels of plural respective recording media that are connected via a prescribed interface; and
a simultaneous recording module configured to determine a combination of recording media capable of securing the number of channels of the simultaneous recording on the basis of the measured numbers of recordable channels, and configured to perform the simultaneous recording using the determined combination of recording media.

2. The broadcast receiving apparatus according to claim 1, wherein
the simultaneous recording module determines a combination of recording media further on the basis of capacities of the respective recording media.

3. The broadcast receiving apparatus according to claim 2, wherein
the simultaneous recording module performs the simultaneous recording on the basis of maximum recordable times, depending on the capacities of the respective recording media and the numbers of channels within the numbers of recordable channels, of the respective recording media.

4. The broadcast receiving apparatus according to one of claims 1 to 3, wherein
the interface is a USB interface.

5. A broadcast receiving method comprising:
setting simultaneous recording with plural channels;
measuring the numbers of recordable channels of plural respective recording media that are connected via a prescribed interface; and
determining a combination of recording media capable of securing the number of channels of the simultaneous recording on the basis of the measured numbers of recordable channels, and performing the simultaneous recording using the determined combination of recording media.
